# EUROPÄISCHE PATENTSCHRIFT

(11) **EP 2 627 433 B1**
(45) Veröffentlichungstag und Bekanntmachung des Hinweises auf die Patenterteilung: **17.08.2016**
(21) Anmeldenummer: 11751535.3
(22) Anmeldetag: 13.07.2011
(51) Int. Cl.: B01D 53/56, B01D 53/34, B01D 53/00

(54) **VERFAHREN UND VORRICHTUNG ZUR REINIGUNG LACHGASHALTIGER ABGASE**
METHOD AND DEVICE FOR SCRUBBING EXHAUST GASES CONTAINING NITROUS OXIDE
PROCÉDÉ ET DISPOSITIF POUR LA PURIFICATION DE GAZ D'ÉCHAPPEMENT À TENEUR EN GAZ HILARANT

(30) Priorität: 12.10.2010 DE 102010048040
(43) Veröffentlichungstag der Anmeldung: 21.08.2013
(73) Patentinhaber: Chemisch Thermische Prozesstechnik GmbH, 8042 Graz (AT)
(72) Erfinder: SCHEDLER, Johannes, A-8410 Wildon (AT); THALHAMMER, Heimo, A-8020 Graz (AT); MÜLLEDER, Christian, A-8071 Grambach (AT)
(74) Vertreter: LS-MP von Puttkamer Berngruber Loth Spuhler
(86) Internationale Anmeldenummer: PCT/EP2011/003487
(87) Internationale Veröffentlichungsnummer: WO 2012/048765

(56) Entgegenhaltungen:
- EP-A1- 1 642 635
- WO-A1-98/50165
- WO-A2-2008/024367
- DE-A1- 2 845 593
- US-A- 5 547 650
- US-A- 5 589 142

## Beschreibung

Die Erfindung bezieht sich auf ein Verfahren zur Reinigung eines Abgasstromes, der Lachgas enthält, nach dem Oberbegriff des Anspruchs 1.

Lachgas (N₂O) stellt ein Nebenprodukt bei der Salpetersäureproduktion und bei Prozessen dar, bei denen Salpetersäure eingesetzt wird, beispielsweise als Oxidationsmittel bei der Herstellung von Adipinsäure.

Lachgas trägt jedoch nicht nur zum Abbau der Ozonschicht bei. Vielmehr stellt es ein Treibhausgas dar, dessen Erderwärmungspotenzial dem 310-fachen von CO₂ entspricht.

Aus EP 1 022 047 B1 ist bereits ein Verfahren nach dem Oberbegriff des Anspruchs 1 bekannt. Dabei wird die thermische Zersetzung des Lachgases, also dessen Umwandlung zur Stickstoff (N₂) und Sauerstoff (O₂) an der Oberfläche von inertem Material bei einer Temperatur zwischen 800 und 1200 C bei einem Überdruck von 1 bis 10 bar und einer typischen Verweilzeit von 2 bis 20 Sekunden durchgeführt.

Neben der erforderlichen unwirtschaftlich langen Verweilzeit stellt der hohe Betriebsdruck einen wesentlichen Nachteil des bekannten Verfahrens dar. Zudem werden Stickoxide, die bereits in dem Abgas enthalten sind, nicht beseitigt, ebenso wenig Stickoxide, die bei der thermischen Zersetzung des Lachgases entstehen.

Aus EP 1 257 347 B1 ist ein katalytisches Verfahren zur N₂O-Abreinigung bekannt. Es ist jedoch nur bei sehr eng begrenzten Abgasbedingungen einsetzbar. Zudem muss der Wassergehalt des Abgases unter 0,5 Vol.-% liegen, da sonst der Katalysator deaktiviert wird.

Aufgabe der Erfindung ist es, ein Verfahren zur Reinigung eines Lachgas-haltigen Abgases mit geringen Energiekosten bereitzustellen, das auch bei Abgasen die weitere Bestandteile, wie Wasser, organische Schadstoffe, oder auch Katalysatorgifte oder dergleichen enthalten, problemlos einsetzbar ist.

Dies wird erfindungsgemäß mit dem im Anspruch 1 gekennzeichneten Verfahren erreicht. In den Unteransprüchen sind vorteilhafte Ausgestaltungen der Erfindung wiedergegeben. Nach der Erfindung wird der Lachgas-haltige Abgasstrom mit einer Anlage gereinigt, die wenigstens zwei Regeneratoren aufweist, die jeweils eine Wärmespeichermasse enthalten und durch eine auf die Zersetzungs- oder Reaktionstemperatur von Lachgas erhitzbare Zersetzungskammer miteinander verbunden sind. Dabei ist jeder Regenerator an der von der Zersetzungs- oder Reaktionskammer abgewandten Seite der Wärmespeichermasse über ein Einlassabsperrorgan an die Abgasleitung und über ein Auslassabsperrorgan an die Reingasleitung angeschlossen, über die das gereinigte Abgas in die Atmosphäre abgegeben wird.

Der Abgasstrom wird den Regeneratoren in Zyklen wechselweise zugeführt. Dabei wird je Zyklus der Abgasstrom demjenigen Regenerator zugeführt, dessen Wärmespeichermasse zuvor erwärmt worden ist. Das Lachgas in dem erwärmten Abgasstrom wird anschließend in der Zersetzungskammer thermisch zersetzt, um Reingas zu bilden, das durch den wenigsten einen weiteren Regenerator unter Erwärmung von dessen Wärmespeichermasse abgezogen wird, dem anschließend der Abgasstrom zugeführt wird. Das Abziehen des Reingases kann durch ein Gebläse in der Reingasleitung und/oder ein Gebläse in der Abgasleitung zur Förderung des Abgasstromes erfolgen.

Die Erwärmung des Abgasstromes in der Zersetzungskammer auf Zersetzungstemperatur erfolgt durch die exotherme Reaktion der Lachgaszersetzung, also der Spaltung des Lachgases (N₂O) in Stickstoff (N₂) und Sauerstoff (O₂).

Zum Aufheizen der Zersetzungs- oder Reaktionskammer auf Zersetzungstemperatur zu Beginn der Abgasreinigung oder bei einem geringen Lachgasgehalt des Abgasstromes ist jedoch vorzugsweise eine zusätzliche Heizung vorgesehen. Die Heizung kann durch einen Brenner gebildet werden, vorzugsweise wird jedoch eine Elektroheizung verwendet, insbesondere eine Elektroheizung, die Heizelemente aus Siliziumcarbid aufweist.

Als Wärmespeichermassen werden vorzugsweise prismenförmige, keramische Wärmespeicherkörper mit einer Vielzahl von zur Prismenhauptachse parallelen, also in Strömungsrichtung des Abgases verlaufenden Kanälen verwendet, wie sie beispielsweise in EP 0 472 605 B1 beschrieben sind. Die Temperatur in der Zersetzungskammer zur thermischen Zersetzung des Lachgases beträgt vorzugsweise mehr als 850°C, vorzugsweise 900 bis 1050 °C, insbesondere über 950 °C.

Bei einer Temperatur über 1000 °C in der Zersetzungs- oder Reaktionskammer können sich zunehmend Stickoxide bilden.

Die Verweilzeit des Abgasstromes zur Zersetzung des Lachgases in der Zersetzungs- oder Reaktionskammer beträgt vorzugsweise 0,5 bis 3 Sekunden. Die Umschaltzeit zwischen den Türmen, also die Zeit zum Aufheizen der Wärmespeichermasse durch das Reingas bis nahe der Zersetzungstemperatur in der Zersetzungskammer und der dann erfolgenden Zufuhr des Abgasstromes zu dem Regenerator mit der aufgeheizten Wärmespeichermasse kann beispielsweise 1 bis 5 Minuten betragen.

Wenn zwei Regeneratoren verwendet werden, enthält die Wärmespeichermasse des Regenerators, dem das Abgas zugeführt worden ist, nach dem Umschalten Abgasreste, die zu einer Verunreinigung des Reingases führen. Um diese Verunreinigung zu verhindern, wird vorzugsweise der Regenerator, übe den das Reingas nach dem Umschalten abgezogen worden ist, zuvor mit Reingas gespült. Um eine unterbrechungsfreie Abgasbehandlung zu ermöglichen, ist dafür ein dritter Regenerator der gleichen Bauform mit entsprechenden Umschaltventilen notwendig.

Bei der hohen Temperatur in der Zersetzungskammer können sich bei der Zersetzung des Lachgases (N₂O) zur Stickstoff (N₂) und Sauerstoff (O₂) als Nebenprodukt Stickoxide (Stickstoffmonoxid und Stickstoffdioxid, üblich als NOx bezeichnet) bilden. Auch können in dem zu reinigenden Abgasstrom neben Lachgas Stickoxide bereits enthalten sein.

Vorzugsweise wird nach dem erfindungsgemäßen Verfahren in der Zersetzungskammer deshalb zugleich eine selektive nicht katalytische Reduktion der Stickoxide durchgeführt. Dazu wird der Zersetzungskammer eine Stickstoffwasserstoff-Verbindung zur Reduktion der Stickoxide zur Stickstoff zugeführt. Als Stickstoffwasserstoff-Verbindung wird vorzugsweise Ammoniak, Harnstoff und/oder Carbaminsäure, jeweils in wässriger Lösung verwendet. Zur Zufuhr der Stickstoffwasserstoff-Verbindung sind in der Reaktionskammer Düsen vorgesehen.

Damit die Stickstoffwasserstoff-Verbindung möglichst über den gesamten Strömungsquerschnitt des Abgasstromes in der Zersetzungskammer verteilt wird, wird sie vorzugsweise als Lösung, insbesondere wässrige Lösung eingedüst, beispielsweise als 10 bis 30 Gew.-%-ige Lösung der Stickstoffwasserstoff-Verbindung. Die Lösung wird als ein Sprühnebel mit entsprechender Tröpfchengrößenverteilung in den Abgasstrom eingedüst. Durch die Lösung wird in den Zonen der Reaktionskammer, in denen sie eingedüst wird, das vorhandene und aus dem Lachgas entstehende NOx reduziert. Zur Senkung der erforderlichen Reaktionstemperatur kann die Lösung zusätzlich Additive enthalten, beispielsweise organische Verbindungen, wie Alkohole mit 4 und mehr Kohlenstoffatomen.

Zur optimalen Verteilung der Lösung der Stickstoffwasserstoff-Verbindung in der Reaktionskammer können sogenannte Zweistoffdüsen, also Düsen verwendet werden, die eine mittlere Öffnung zum Einspritzen der Stickstoffwasserstoff-Verbindung und eine dazu konzentrische Öffnung zur Druckgaszufuhr aufweisen, oder Düsen mit Ultraschallzerstäuber. Das Druckgas kann dabei mit konstantem Druck zugeführt werden, vorzugsweise wird jedoch ein pulsierender Druck angewendet, um eine bessere Verteilung der Stickstoffwasserstoff-Verbindung über den gesamten Strömungsquerschnitt des Abgasstromes in der Zersetzungskammer zu erreichen.

Die Düsen sind dabei in mehreren Zonen angeordnet, die entlang des Strömungsweges des Abgases in der Zersetzungskammer vorgesehen sind. Von diesen Zonen bzw. Düsen ist eine Zone bzw. Düse oder Gruppe von Düsen der Wärmespeichermasse des einen Regenerators und eine Zone bzw. Düse oder Gruppe von Düsen der Wärmespeichermasse des wenigstens eines weiteren Regenerators benachbart. Damit für die Reduktion der Stickoxide mit der Stickstoffwasserstoff-Verbindung in der Zersetzungskammer eine ausreichende Zeitspanne zur Verfügung steht, wird vorzugsweise die Zufuhr der Stickstoffwasserstoff-Verbindung jeweils in der Zone, also jeweils bei der Düse unterbrochen, die der Wärmespeichermasse des Regenerators benachbart ist, über den das Reingas abgezogen wird.

Um die Stickstoffwasserstoff-Verbindung in dem Abgasstrom in der Zersetzungskammer zu verwirbeln, weist die Zersetzungskammer vorzugsweise Einschnürungen auf. Dabei ist vorzugsweise vor und nach jeder Einschnürung eine Zone, also eine Düse oder Gruppe von Düsen zur Zufuhr der Stickstoffwasserstoff-Verbindung vorgesehen.

Mit dem erfindungsgemäßen Verfahren kann zugleich Abgas gereinigt werden, das neben Lachgas und gegebenenfalls Stickoxiden brennbare Kohlenstoffverbindungen, also beispielsweise Kohlenmonoxid oder organische Schadstoffe enthält, die in der Zersetzungs- oder Reaktionskammer zu Kohlendioxid und Wasser verbrannt werden.

Ein Zusatzbrennstoff zum Betrieb der erfindungsgemäßen Reinigungsanlage ist jedoch in vielen Fällen nicht erforderlich. Durch die Exothermie der Umwandlung von Lachgas zu Stickstoff und Sauerstoff ist zumindest bei ausreichend hoher Lachgaskonzentration ein autothermer Betrieb möglich.

Das erfindungsgemäße Verfahren ist also insbesondere zur Reinigung von Abgas geeignet, welches Lachgas und Stickoxide mit einem zusätzlichen Gehalt an Wasser von beispielsweise mehr als 0,5 Vol.-%, sowie organische und/oder anorganische Kohlenstoffverbindungen enthält. Dabei können erfindungsgemäß auch Lachgas sowie gegebenenfalls Stickoxide und/oder Kohlenstoffverbindungen enthaltende Abgase gereinigt werden, die Katalysatorgifte, also beispielsweise Schwermetalle, Staub oder einen hohen Wassergehalt enthalten.

Derartige Abgase fallen beispielsweise bei der Salpeter-, Adipinsäure-, Düngemittel- oder Urantrioxidproduktion an. Demgemäß sind das erfindungsgemäße Verfahren und die erfindungsgemäße Vorrichtung insbesondere zur Verwendung bei der Salpeter-, Adipinsäure-, Düngemittel- und/oder Urantrioxidproduktion bestimmt.

Die Reinigungsanlage ist dabei auf einen Betrieb bei Atmosphärendruck ausgelegt. D. h. die Reinigungsanlage kann relativ einfach aufgebaut sein.

Statt lediglich zwei Regeneratoren kann die Anlage auch ein Vielfaches von zwei Regeneratoren, also 4, 6, 8 und so weiter Regeneratoren oder bei Spülung der Regeneratoren 5, 7 bzw. 9 Regeneratoren aufweisen, die jeweils eine Wärmespeichermasse enthalten und über die Zersetzungskammer miteinander verbunden sind. Dabei werden zwei oder mehr Regeneratoren zur Zufuhr des Abgasstromes zur Zersetzungskammer und zwei oder mehr Regeneratoren zum Abziehen des Reingases zur Zersetzungskammer parallel geschaltet und ein Regenerator zur Freispülung des Rohgases verwendet. Entsprechend angeordnete und geschaltete Regeneratoren können beispielsweise EP 1 593 909 A2 entnommen werden.

Das nachstehende Beispiel dient der weiteren Erläuterung der Erfindung:
Beispiel: Urantrioxidproduktion

Das gemahlene Uranerz wird mit H₂SO₄ ausgelaugt und mit einem Oxidationsmittel, beispielsweise MnO₂ oder Na₂ClO₃ versetzt, wodurch das gut lösliche Uranylsulfat gemäß folgender Reaktionsgleichung entsteht:

UO₂ + H₂SO₄ + ½ O₂ → UO₂ (SO₄) + H₂O

Uranoxid Uranylsulphat

Nach den Reinigungsschritten der Lösung durch Dekantieren, Filtration, Flüssigextraktion oder Ionenaustausch wird mit Ammoniak der sogenannte "Yellow Cake" als Ammoniumdiuranat gefällt und durch Filtration und Waschen von der Mutterlauge befreit.

In dem nachfolgenden Röstprozess bei 450 °C wird das Ammoniumdiuranat zu Urantrioxid oxidiert, wobei N₂O, NH₃ und NOx entsteht.

Das beim Rösten gebildete Abgas wird in einem zweistufigen Salpetersäurewäscher von Ammoniak (NH₃) und Urantrioxid (UO₃)-Staub befreit.

Das Lachgas und die Stickoxide können aus dem Abgas durch Auswaschen nicht beseitigt werden. Somit werden Reste von Ammoniak und Stickoxiden in dem wassergesättigten Abgas der erfindungsgemäßen Reinigungsanlage zugeführt.

Das erfindungsgemäße Verfahren erlaubt durch den hohen thermischen Wirkungsgrad des regenerativen Wärmeaustausch vorzugsweise in Kombination mit der selektiven nicht katalytischen Reduktion sowohl die Lachgasabreinigung, bei der in Nebenreaktion ca. 6 mol % Stickoxide gebildet werden, als auch die simultane Entstickung.

Typische Abluftzusammensetzung nach diesem Beispiel mit einer derartigen Produktionsanlage:

| | |
|---|---|
| Lachgas | 15 g/Nm³ |
| Wasserdampf | 30 Vol.-% |
| Luftbestandteile ca. | 55 Vol.-% |
| Stickoxide | 0,5 g/Nm³ berechnet als NO₂ |
| Ammoniak | 0,05 g/Nm* |

Erforderliche Menge an Reduktionsmittel: 4,5 kg Ammoniakwasser 25 %-ig pro 1000 Nm³.

Reingaszusammensetzung mit einer erfindungsgemäßen Zweibettanlage:

| | |
|---|---|
| Lachgas | 0,75 g/Nm³ (entspricht 95 % Reinigung) |
| Wasserdampf | 30 Vol.-% |
| Luftbestandteile ca. | 55 Vol.-% |
| Stickoxide | 0,65 g/Nm³ berechnet als NO₂ |
| Ammoniak | 0,03 g/Nm* |

Der leichte Anstieg der Stickoxide von 0,5 auf 0,65 g/Nm³ Abgas ist dabei ohne weiteres tolerierbar. Ohne Eindüsung des Reduktionsmittels steigt der Gehalt an Stickoxiden auf 1,5 g/Nm³ an.

Nachstehend ist die Erfindung anhand der beigefügten Zeichnungen beispielhaft näher erläutert. Darin zeigen:

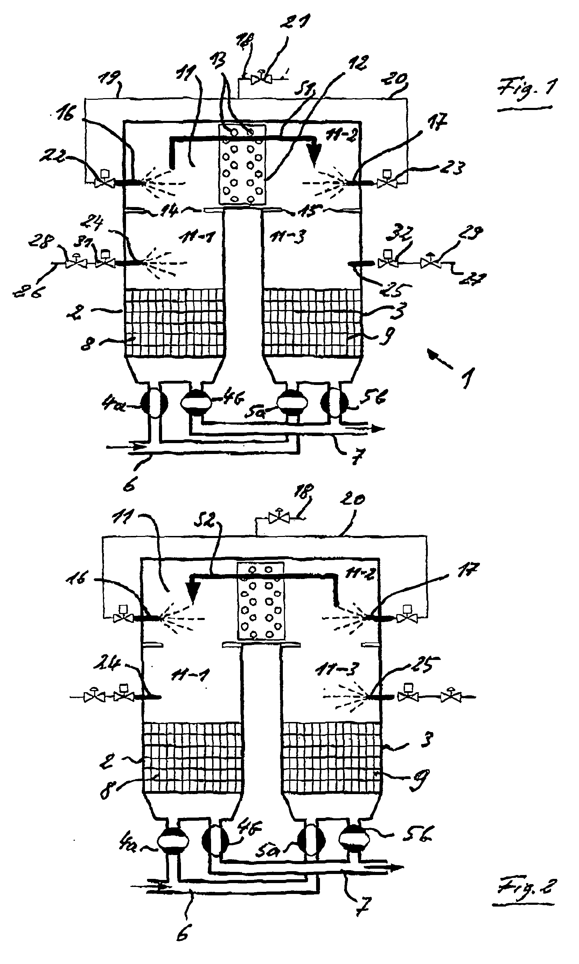

Figur 1 und 2 in Querschnitt eine Ausführungsform der Abgasreinigungsanlage mit zwei Regeneratoren, wobei das zu reinigende Abgas dem einen bzw. anderen Regenerator zugeführt wird.

Gemäß Figur 1 und 2 weist die Abgasreinigungsanlage 1 zwei Regeneratoren 2 und 3 auf, deren unteres Ende jeweils mit einem Ventil oder dergleichen Absperrorgan 4a, 4b und 5a, 5b mit der Abgasleitung 6 mit dem zu reinigenden Abgas und der Reingasleitung 7 verbindbar ist.

Die Regeneratoren 2 und 3 sind mit Wärmespeichermassen 8 und 9 gefüllt und über eine Reaktionsskammer 11, die mit einer Elektroheizung 12 mit Siliziumcarbidstäben 13 versehen ist, verbunden.

Die Reaktionskammer 11 besteht aus drei Zonen, und zwar eine ersten Zone 11-1 über den Wärmespeichermassen 8 des eines Regenerators 2, einer zweiten Zone 11-2 zwischen den beiden Regeneratoren 2 und 3 und einer dritten Zone 11-3 über den Wärmespeichermasse 9 des anderen Regenerators 3. Dabei ist in den Regeneratoren 2 und 3 oberhalb der Wärmespeichermasse 8 und 9 jeweils eine Einschnürung 14, 15 zur Verwirbelung des Abgasstromes vorgesehen.

Oberhalb der Einschnürungen 14, 15 ist die zweite Zone 11-2 der Kammer 11 in Strömungsrichtung S1 und S2 des Abgases jeweils am Beginn und am Ende mit Lanzen mit Düsen 16 und 17 zur Zufuhr einer wässrigen Ammoniak-Lösung oder einer anderen Stickstoffwasserstoff-Verbindung versehen, welche über die mit einem Dosierventil 21 versehene Leitung 18 zugeführt wird, von der die Leitungen 19 und 20 abzweigen, die mit Absperrventilen 22 und 23 versehen sind.

Der Abgasstrom aus der Abgasleitung 6 wird den Regeneratoren 2 und 3 wechselweise zugeführt, wobei nach Figur 1 das Abgas in den Regenerator 2 strömt, dessen Wärmespeichermasse 8 zuvor erwärmt worden ist, während das Reingas über den Regenerator 3 abgezogen wird, so dass in der Reaktionskammer 11 das Abgas in Richtung des Pfeiles S1 strömt. Dazu ist an dem Regenerator 2 das Absperrorgan 4a geöffnet und das Absperrorgan 4b geschlossen, während das Absperrorgan 5a an dem Regenerator 3 geschlossen und das Absperrorgan 5b geöffnet ist.
Ab dem Eintritt des Abgases in die Reaktionskammer 11 findet die Spaltung des Lachgases statt, wobei als Nebenprodukt Stickoxide gebildet werden.
Die am Beginn der zweiten Zone 11-2 über die Düse 16 zugeführte Stickstoffwasserstoff-Verbindung führt bei dem Abgasstrom in Richtung des Pfeiles S1 in der zweiten Zone 11-2 der Zersetzungskammer 11 zu einer thermischen Reduktion der schon vorhandenen und neu entstehenden Stickoxide. Durch die Düse 17 am Ende der zweiten Zone 11-2 werden weitere Anteile von Stickoxiden in der dritten Zone 11-3 reduziert.

In der ersten Zone 11-1 und in der dritten Zone 11-3 der Reaktionskammer 11 ist jeweils eine Düse 24, 25 vorgesehen, über die Stickstoffwasserstoff-Verbindung in die erste Zone 11-1 und die dritte Zone 11-3 eingedüst wird, welche über mit einem Dosierventil 28, 29 und einem Absperrventil 31, 32 versehene Leitungen 26, 27 zugeführt wird. Dabei ist gemäß Figur 1 das Absperrventil 31 in der Leitung 26 geöffnet, während das Absperrventil 32 in der Leitung 27 geschlossen ist. Dadurch wird die Stickstoff-Wasserstoffverbindung nur der ersten Zone 11-1 zugeführt, die der Wärmespeichermasse 8 des Regenerators 2 benachbart ist, während die Zufuhr der Stickstoffwasserstoff-Verbindung zu der dritten Zone 11-3 unterbrochen ist, die der Wärmespeichermasse 9 in dem Regenerator 3 benachbart ist, die durch das heiße Reingas aufgeheizt worden ist. Anschließend wird der Regenerator 3 durch Öffnen des Absperrorgans 5a mit der Abgasleitung 6 verbunden und durch Schließen des Absperrorgans 5b von der Reingasleitung 7 getrennt, während der Regenerator 2 durch Schließen des Absperrorgans 4a von der Abgasleitung 6 getrennt und durch Öffnen des Absperrorgans 4b mit der Reingasleitung 7 verbunden wird.

Damit wird die Strömungsrichtung des Abgases in der Reaktionskammer 11 umgekehrt, wie durch den Pfeil S2 in Figur 2 dargestellt.

## Patentansprüche

1. Verfahren zur Reinigung eines Abgasstromes, der Lachgas enthält, durch thermische Spaltung des Lachgases, wobei der Abgasstrom mit einer Anlage (1) gereinigt wird, die wenigstens zwei Regeneratoren (2, 3) aufweist, die jeweils eine Wärmespeichermasse (8, 9) enthalten und durch eine auf die Reaktionstemperatur des Lachgases erhitzte Reaktionskammer (11) miteinander verbunden sind, wobei der Abgasstrom in Zyklen wechselweise dem Regenerator (2, 3) zugeführt wird, dessen Wärmespeichermasse (8, 9) zuvor erwärmt worden ist und durch thermische Spaltung des Lachgases in der Reaktionskammer (11) Reingas gebildet wird, welches durch den wenigstens einen weiteren Regenerator (3, 2) unter Erwärmung von dessen Wärmespeichermasse (9, 8) abgezogen wird, wobei der Reaktionskammer (11) eine Stickstoffwasserstoff-Verbindung als wässrige Lösung in mehreren über den Strömungsweg (S1, S2) des Abgases in der Reaktionskammer (11) verteilten Zonen (11-1, 11-3) zugeführt wird, von denen eine Zone (11-1) der Wärmespeichermasse (8) des einen Regenerators (2) und eine Zone (11-3) der Wärmespeichermasse (9) des wenigstens einen weiteren Regenerators (3) benachbart ist, wobei die Zufuhr der Stickstoffwasserstoff-Verbiridung jeweils zu der Zone (11-1, 11-3) unterbrochen wird, die der Wärmespeichermasse (8, 9) des Regenerators (2, 3) benachbart ist, über den das Reingas abgezogen wird, zur Reduktion von bei der Lachgasspaltung gebildeten Stickoxiden zu Stickstoff.

2. Verfahren nach Anspruch 1, **dadurch gekennzeichnet, dass** die Temperatur in der Reaktionsskammer (11) zur thermischen Spaltung des Lachgases mehr als 850 °C beträgt.

3. Verfahren nach Anspruch 1 oder 2, **dadurch gekennzeichnet, dass** die Verweilzeit des Abgasstromes zur Spaltung des Lachgases in der Reaktionskammer 0,5 bis 3 Sekunden beträgt.

4. Verfahren nach einem der Ansprüche 1 bis 3, **dadurch gekennzeichnet, dass** der Regenerator (2, 3), durch den das Reingas abgezogen wird, zuvor mit Reingas gespült worden ist.

5. Verfahren nach Anspruch 1, **dadurch gekennzeichnet, dass** der Abgasstrom neben Lachgas Stickoxide (NOx) enthält.

6. Verfahren nach einem der vorstehenden Ansprüche, **dadurch gekennzeichnet, dass** der Abgasstrom neben Lachgas Kohlenstoffverbindungen enthalt, die in der Reaktionskammer (11) verbrannt werden.

## Claims

1. Process for the purification of a waste gas flow containing nitrous oxide by thermal decomposition of the nitrous oxide, wherein the waste gas flow is purified by means of a system (1) which has at least two regenerators (2, 3) each containing a heat-accumulator material (8, 9) and being connected to one another by a reaction chamber (11) heated to the reaction temperature of the nitrous oxide, wherein the waste gas flow is alternately supplied to the regenerator (2, 3) in cycles, the heat-accumulator material (8, 9) of which has previously been heated, and wherein, by thermal decomposition of the nitrous oxide in the reaction chamber (11), clean gas is formed which is drawn off through the at least one further regenerator (3, 2) by heating the heat-accumulator material (9, 8) thereof, wherein a nitrogen-hydrogen compound is supplied to the reaction chamber (11) as an aqueous solution in a plurality of zones (11-1, 11-3) distributed in the reaction chamber (11) over the flow path (S1, S2) of the waste gas, of which one zone (11-1) is adjacent to the heat-accumulator material (8) of the one regenerator (2) and one zone (11-3) is adjacent to the heat-accumulator material (9) of the at least one further regenerator (3), wherein supply of the nitrogen-hydrogen compound to that zone (11-1, 11-3) is interrupted which is adjacent to the heat-accumulator material (8, 9) of the regenerator (2, 3) through which the clean gas is drawn off in order to reduce nitrogen oxides formed during the decomposition of nitrous oxide to nitrogen.

2. Process according to claim 1, **characterized in that** the temperature in the reaction chamber (11) for the thermal decomposition of the nitrous oxide is more than 850 °C.

3. Process according to claim 1 or 2, **characterized In that** the residence time of the waste gas flow for the decomposition of the nitrous oxide In the reaction chamber is 0,5 to 3 seconds.

4. Process according to any of claims 1 to 3, **characterized in that** the regenerator (2, 3) through which the clean gas is drawn off has previously been purged with clean gas.

5. Process according to claim 1, **characterized in that**, in addition to nitrous oxide, the waste gas flow contains nitrogen oxides (NOx).

6. Process according to any of the preceding claims, **characterized in that**, in addition to nitrous oxide, the waste gas flow contains carbon compounds which are combusted in the reaction chamber (11).

## Revendications

1. Procédé pour la purification d'un flux de gaz d'échappement qui contient du gaz hilarant par dissociation thermique du gaz hilarant, le flux de gaz d'échappement étant purifié avec une installation (1) qui présente au moins deux régénérateurs (2, 3) qui contiennent chacun une masse d'accumulation de chaleur (8, 9) et qui sont reliés l'un à l'autre par une chambre de réaction (11) chauffée à la température de réaction du gaz hilarant, le flux de gaz d'échappement étant amené par cycles alternativement au régénérateur (2, 3) dont la masse d'accumulation de chaleur (8, 9) a été auparavant réchauffée, et du gaz purifié étant formé par la dissociation thermique du gaz hilarant dans la chambre de réaction (11), gaz purifié qui est retiré à travers ledit au moins un autre régénérateur (3, 2) en réchauffant sa masse d'accumulation de chaleur (9, 8), un composé d'azote et d'hydrogène, sous forme de solution aqueuse, étant amené à la chambre de réaction (11) dans plusieurs zones (11-1, 11-3) réparties sur le chemin d'écoulement (S1, S2) du gaz d'échappement dans la chambre de réaction (11), dont une zone (11-1) est voisine de la masse d'accumulation de chaleur (8) de l'un des régénérateurs (2) et une zone (11-3) est voisine de la masse d'accumulation de chaleur (9) dudit au moins autre régénérateur (3), l'amenée du composé d'azote et d'hydrogène étant respectivement interrompue vers la zone (11-1, 11-3) qui est voisine de la masse d'accumulation de chaleur (8, 9) du régénérateur (2,3) via lequel le gaz purifié est retiré pour réduire les oxydes d'azote formés lors de la dissociation du gaz hilarant en azote.

2. Procédé selon la revendication 1, **caractérisé en ce que** la température dans la chambre de réaction (11) pour la dissociation thermique du gaz hilarant est supérieure à 850°C,

3. Procédé selon la revendication 1 ou 2, **caractérisé en ce que** le temps de séjour du flux de gaz d'échappement pour la dissociation du gaz hilarant dans la chambre de réaction est de 0,5 à 3 secondes.

4. Procédé selon l'une des revendications 1 à 3, **caractérisé en ce que** le régénérateur (2, 3), à travers lequel le gaz purifié est retiré, a été rincé auparavant avec du gaz purifié.

5. Procédé selon la revendication 1, **caractérisé en ce que** le courant de gaz d'échappement contient des oxydes d'azote (NOx), en plus du gaz hilarant.

6. Procédé selon l'une des revendications précédentes, **caractérisé en ce que** le flux de gaz d'échappement contient, en plus du gaz hilarant, des composés carbonés qui sont brûlées dans la chambre de réaction (11).
